# EUROPÄISCHE PATENTSCHRIFT

(11) **EP 1 843 366 B1**
(45) Veröffentlichungstag und Bekanntmachung des Hinweises auf die Patenterteilung: **06.05.2015**
(21) Anmeldenummer: 07006213.8
(22) Anmeldetag: 27.03.2007
(51) Int. Cl.: H01H 9/02, H05B 37/02

(54) **Elektrisches/elektronisches Installationsgerät mit Bewegungsmelder und manueller Schalteinrichtung**
Electrical/electronic installation device with motion detector and manual switch device
Appareil d'installation électrique/électronique doté d'un détecteur de mouvement et d'un dispositif de commutation manuel

(30) Priorität: 07.04.2006 DE 102006016393
(43) Veröffentlichungstag der Anmeldung: 10.10.2007
(73) Patentinhaber: ABB AG, 68309 Mannheim (DE)
(72) Erfinder: Klett, Martin, Dipl.-Ing., 44141 Dortmund (DE); Rümenapf, Peter, Dipl.-Ing., 58579 Schalksmühle (DE); Szkudlarek, Thomas, Dipl.-Ing., 45665 Recklinghausen (DE); Schweizer, Walter, Dipl.-Ing., 44369 Dortmund (DE)

(56) Entgegenhaltungen:
- EP-A- 0 948 242
- WO-A-93/05627
- DE-A1- 10 329 358

## Beschreibung

Die Erfindung bezieht sich auf ein elektrisches/elektronisches Installationsgerät mit Bewegungsmelder und manueller Schalteinrichtung gemäß dem Oberbegriff des Anspruchs 1. Die Erfindung kann beispielsweise in der Gebäudesystemtechnik verwendet werden.

Aus der DE 103 29 358 B4 ist eine elektrische/elektronische Einrichtung der Gebäudesystemtechnik mit zumindest einer als Bewegungsmelder ausgeführten ersten Funktionseinheit und zumindest einer als Schaltgerät ausgeführten zweiten Funktionseinheit bekannt, wobei der Bewegungsmelder und das Schaltgerät von einer Designabdeckung aufgenommen sind, und wobei die als Schaltgerät ausgeführte zweite Funktionseinheit mehrere elektrische Schaltelemente zur Aktivierung verschiedener Funktionen des Bewegungsmelders aufweist. Die den Bewegungsmelder aufnehmende Designabdeckung der ersten Funktionseinheit ist als Betätigungsglied für die zweite Funktionseinheit ausgeführt. Wird beispielsweise die untere Griffleiste der Designabdeckung beaufschlagt, führt dies je nach Betätigungslänge zum Ausschalten, zum Nachtriggern der eingestellten Nachlaufzeit oder zum Abdimmen der angeschlossenen Leuchtmittel. Wird beispielsweise die obere Griffleiste der Designabdeckung beaufschlagt, führt dies je nach Betätigungslänge zum Einschalten, zum Nachtriggern der eingestellten Nachlaufzeit oder zum Aufdimmen der angeschlossenen Leuchtmittel. Werden untere und obere Griffleiste der Designabdeckung gleichzeitig beaufschlagt, führt dies je nach Betätigungslänge zum Einschalten oder zum Nachtriggern der eingestellten Nachlaufzeit. Zudem kann durch diesen Vorgang beispielsweise ein vorher eingestellter Helligkeitswert der angeschlossenen Leuchtmittel abgespeichert werden.

Dokument EP 1 158 840 A offenbart ein ähnliches Installationsgerät.

Der Erfindung liegt die Aufgabe zugrunde, ein elektrisches/elektronisches Installationsgerät mit Bewegungsmelder und manueller Schalteinrichtung anzugeben, welches in unterschiedlichen, vom Kunden einstellbaren Betriebsarten betreibbar ist. Diese Aufgabe wird in Verbindung mit den Merkmalen des Oberbegriffes erfindungsgemäß durch die im Kennzeichen des Anspruchs 1 angegebenen Merkmale gelöst. Die mit der Erfindung erzielbaren Vorteile bestehen insbesondere darin, dass ein Installationsgerät geschaffen wird, dass vom Kunden wahlweise auf vier unterschiedliche Betriebsarten einstellbar ist, und zwar auf eine vollautomatische, durch den Bewegungsmelder vorgegebene respektive gesteuerte Betriebsart, auf eine durch die manuelle Schalteinrichtung vorgegebene manuelle Betriebsart, auf eine halbautomatische Betriebsart mit manuellem Einschalten durch Betätigung der Schalteinrichtung und automatischem Ausschalten durch den Bewegungsmelder und auf eine halbautomatische Betriebsart mit automatischem Einschalten durch den Bewegungsmelder und manuellem Ausschalten durch Betätigung der Schalteinrichtung.

Weitere Vorteile sind aus der nachstehenden Beschreibung ersichtlich. Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: ein Prinzipschaltbild des elektrischen/elektronischen Installationsgeräts mit Bewegungsmelder und manueller Schalteinrichtung,
- Fig. 2: Ausführungsformen für die Zeiteinstellung und Dämmerungseinstellung,
- Fig. 3: einen Schnitt durch einen Geräteeinsatz des elektrischen/elektronischen Installationsgeräts,
- Fig. 4: eine perspektivische Sicht auf eine Leiterplatte des elektrischen/elektronischen Installationsgeräts,
- Fig. 5: ein montiertes elektrisches/elektronisches Installationsgerät,
- Fig. 6: eine Seitenansicht eines aus Geräteeinsatz und Gerätesockel bestehenden Komplettgeräts.

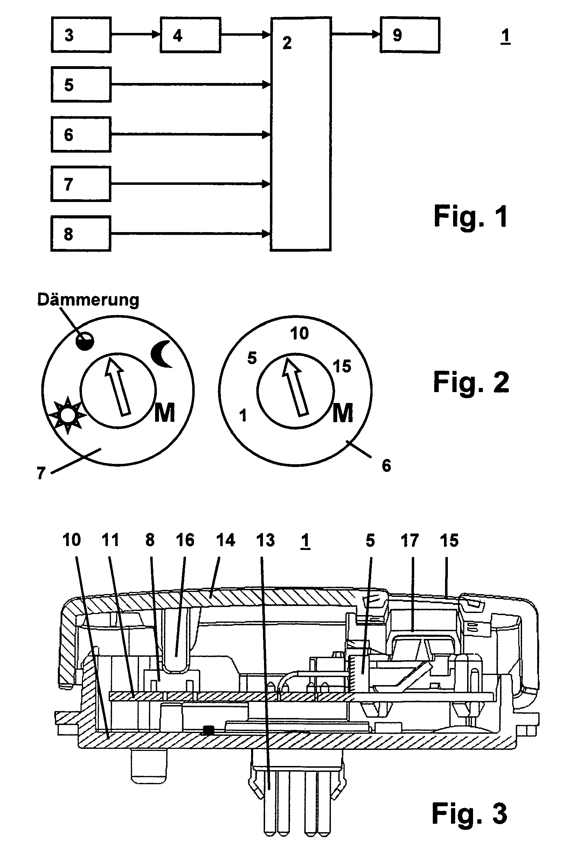

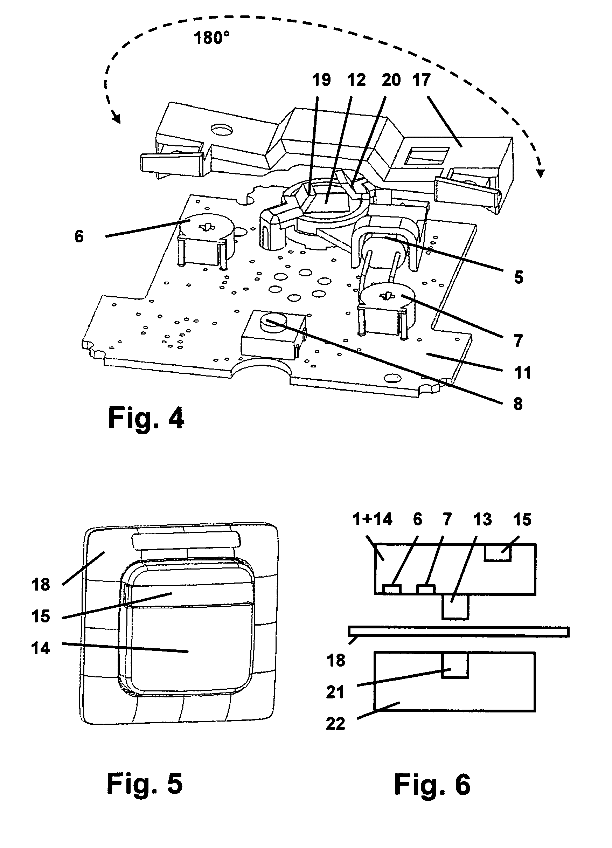

In Fig. 1 ist ein Prinzipschaltbild des elektrischen/elektronischen Installationsgeräts mit Bewegungsmelder und manueller Schalteinrichtung dargestellt. Das elektrische/elektronische Installationsgerät 1 mit Bewegungsmelder (PIR-Bewegungsmelder, d. h. Passiv-Infrarotbewegungsmelder) und manueller Schalteinrichtung besteht aus einem auf einer Leiterplatte (siehe Ziffer 11 in den Fig. 3 und 4) montierten Bewegungsmelder-Mikroprozessor 2 (Auswerteeinrichtung), der ausgangsseitig ein eine Beleuchtungseinrichtung beaufschlagendes Schaltglied 9 (Relais oder Triac) ansteuert und der eingangsseitig mit den folgenden Baukomponenten beschaltet ist:
- einer IR-Detektor/Linsen-Anordnung 3 (ggf. inklusive Spiegel zur Umlenkung von IR-Strahlung) mit pyroelektrischem Infrarotsensor (vorzugsweise Dualsensor) und vorzugsweise einer Stufenlinse (Fresnel-Linse) für die Detektion von IR-Strahlung einer "bewegten" Wärmequelle in einem weiten Erfassungsbereich (vorzugsweise 180°), wobei die Signale des IR-Sensors mittels Verstärker/Filter 4 aufbereitet werden,
- einem Tageslichtsensor 5 (lichtabhängiger Photowiderstand oder Photodiode) zur Bildung eines Dämmerungsschalters, mit dem dafür gesorgt wird, dass das Bewegungsmeldersignal erst dann verarbeitet wird, wenn ein voreingestelltes Helligkeitsniveau bzw. der entsprechende Lichtwert unterschritten ist,
- einer Zeiteinstellung 6, d. h. einer Einstellvorrichtung für eine Ausschaltverzögerung (Nachlaufzeit),
- einer Dämmerungseinstellung 7, d. h. einer Einstellvorrichtung für den Dämmerungsschalter (Einstellung des Lichtwertes, unterhalb dessen die Signale des IR-Sensors zu beachten sind und dementsprechend das Einschalten einer Beleuchtung erfolgen soll) und
- einer manuellen Schalteinrichtung 8 (Mikrotaster), welche bei Betätigung (mittels einer Schaltwippe, siehe Ziffer 14 in den Fig. 2 und 4) in Verbindung mit dem Bewegungsmelder-Mikroprozessor 2 und dem Schaltglied 9 die Funktion ausübt, eine sich momentan im eingeschalteten Zustand befindliche Beleuchtungseinrichtung manuell auszuschalten und eine sich momentan im ausgeschalteten Zustand befindliche Beleuchtungseinrichtung manuell einzuschalten. Ferner dient die manuelle Schalteinrichtung 8 zum Umschalten zwischen einer manuellen Betriebsart und einer automatischen Betriebsart, wie nachfolgend im Einzelnen erläutert.

Sind alle Bedingungen für einen Schaltvorgang erfüllt - ausreichend hohe Signalspannung seitens der Baukomponenten IR-Detektor/Linsen-Anordnung 3 und Verstärker/Filter 4 und Freigabe durch den Dämmerungsschalter -, wird ein Zeitglied (Kurzzeitschalter) getriggert, durch das die Beleuchtungseinrichtung ein- und nach Ablauf der mittels Zeiteinstellung 6 einstellbaren Ausschaltverzögerung wieder ausgeschaltet wird. Es wird hierzu auf die Ausführungen im Fachbuch R. Rosch, Passiv-Infrarotbewegungsmelder, Verlag Moderne Industrie, 1996, Seiten 28 - 35 hingewiesen. Dort wird erläutert, dass diese Ausschaltverzögerung etwa zwischen 1 Sekunde und 20 Minuten liegt. Wird vor dem Ende der Ausschaltverzögerung eine erneute Bewegung im IR-Erfassungsbereich registriert, wird der Kurzzeitschalter nachgetriggert, d. h. die eingestellte Ausschaltverzögerung beginnt nach jeder erkannten Bewegung ("bewegte" Wärmequelle) neu. Hierdurch bleibt die Beleuchtungseinrichtung nach der zuletzt erkannten Bewegung für die Dauer der Ausschaltverzögerung eingeschaltet.

Im Unterschied zu bislang üblichen Bewegungsmeldern lässt sich die Zeiteinstellung 6 erfindungsgemäß auf einen unendlich großen Wert einstellen, d. h. die Dauer der Ausschaltverzögerung entspricht einer unendlich großen Zeitspanne. Demzufolge bleibt eine einmal eingeschaltete Beleuchtungseinrichtung auch ohne jedes Nachtriggern stets im eingeschalteten Zustand.

Im Unterschied zu bislang üblichen Bewegungsmeldern lässt sich die Dämmerungseinstellung 7 erfindungsgemäß auf einen unendlich kleinen Wert einstellen, d. h. der Lichtwert, bei dem das Gerät mit der Erfassung der Infrarotstrahlung beginnen soll, entspricht absoluter, in einer natürlichen Umgebung niemals erreichbarer Finsternis. Demzufolge bleibt eine einmal ausgeschaltete Beleuchtungseinrichtung auch bei sehr großer Finsternis trotz Detektion einer "bewegten" Wärmequelle stets im ausgeschalteten Zustand.

Das Installationsgerät ermöglicht damit folgende vier unterschiedliche Betriebsarten:
A) Vollautomatische Betriebsart:
   - Die Zeiteinstellung 6 ist auf einen üblichen Wert, beispielsweise auf 10 Minuten (Ausschaltverzögerung) eingestellt.
   - Die Dämmerungseinstellung 7 ist auf einen üblichen Wert, beispielsweise auf einen bei Dämmerung auftretenden Lichtwert eingestellt.
   - Demzufolge wird in Abhängigkeit der Signale der IR-Detektor/LinsenAnordnung 3 die Beleuchtungseinrichtung automatisch während der Dämmerung und während der Nacht bei Detektion einer "bewegten" Wärmequelle eingeschaltet und dann wieder automatisch ausgeschaltet, wenn während der eingestellten Ausschaltverzögerung keine "bewegte" Wärmequelle mehr detektiert wird.
   - Durch Betätigung (kurzzeitiges Drücken) der manuellen Schalteinrichtung 8 lässt sich unabhängig davon eine eingeschaltete Beleuchtungseinrichtung auch manuell ausschalten.
   - Durch Betätigung (kurzzeitiges Drücken) der manuellen Schalteinrichtung 8 lässt sich unabhängig davon eine ausgeschaltete Beleuchtungseinrichtung auch manuell einschalten.
B) Manuelle Betriebsart:
   - Die Zeiteinstellung 6 ist auf den unendlich großen Wert (entsprechend einer unendlich großen Ausschaltverzögerung) eingestellt.
   - Die Dämmerungseinstellung 7 ist auf einen unendlich kleinen Wert (entsprechend absoluter Finsternis) eingestellt.
   - Demzufolge wird in Abhängigkeit der Signale der IR-Detektor/LinsenAnordnung 3 die Beleuchtungseinrichtung auch bei sehr großer Finsternis und trotz Detektion einer "bewegten" Wärmequelle niemals eingeschaltet.
   - Durch Betätigung (kurzzeitiges Drücken) der manuellen Schalteinrichtung 8 lässt sich eine ausgeschaltete Beleuchtungseinrichtung jedoch manuell einschalten.
   - Durch Betätigung (kurzzeitiges Drücken) der manuellen Schalteinrichtung 8 lässt sich eine eingeschaltete Beleuchtungseinrichtung jedoch manuell ausschalten.
C) Halbautomatische Betriebsart mit manuellem Einschalten und automatischem Ausschalten:
   - Die Zeiteinstellung 6 ist auf einen üblichen Wert, beispielsweise auf 10 Minuten (Ausschaltverzögerung) eingestellt.
   - Die Dämmerungseinstellung 7 ist auf einen unendlich kleinen Wert (entsprechend absoluter Finsternis) eingestellt.
   - Demzufolge wird in Abhängigkeit der Signale der IR-Detektor/LinsenAnordnung 3 die Beleuchtungseinrichtung auch bei sehr großer Finsternis und trotz Detektion einer "bewegten" Wärmequelle niemals automatisch eingeschaltet.
   - Durch Betätigung (kurzzeitiges Drücken) der manuellen Schalteinrichtung 8 lässt sich eine ausgeschaltete Beleuchtungseinrichtung jedoch manuell einschalten.
   - In Abhängigkeit der Signale der IR-Detektor/Linsen-Anordnung 3 wird die Beleuchtungseinrichtung automatisch dann wieder ausgeschaltet, wenn während der eingestellten Ausschaltverzögerung keine "bewegte" Wärmequelle mehr detektiert wird.
   - Durch Betätigung (kurzzeitiges Drücken) der manuellen Schalteinrichtung 8 lässt sich eine eingeschaltete Beleuchtungseinrichtung auch vor Ablauf der Ausschaltverzögerung manuell ausschalten.
D) Halbautomatische Betriebsart mit automatischem Einschalten und manuellem Ausschalten:
   - Die Zeiteinstellung 6 ist auf den unendlich großen Wert (entsprechend einer unendlich großen Ausschaltverzögerung) eingestellt.
   - Die Dämmerungseinstellung 7 ist auf einen üblichen Wert, beispielsweise auf einen bei Dämmerung auftretenden Lichtwert eingestellt.
   - Demzufolge wird in Abhängigkeit der Signale der IR-Detektor/LinsenAnordnung 3 die Beleuchtungseinrichtung automatisch während der Dämmerung und während der Nacht bei Detektion einer "unbewegten" Wärmequelle eingeschaltet.
   - Durch Betätigung (kurzzeitiges Drücken) der manuellen Schalteinrichtung 8 lässt sich eine eingeschaltete Beleuchtungseinrichtung manuell ausschalten.
   - Durch Betätigung (kurzzeitiges Drücken) der manuellen Schalteinrichtung 8 lässt sich eine ausgeschaltete Beleuchtungseinrichtung auch manuell einschalten.
   - Die Beleuchtungseinrichtung wird niemals durch Signale der IR-Detektor/Linsen-Anordnung 3 automatisch ausgeschaltet, auch wenn während einer sehr großen Zeitspanne keine "bewegte" Wärmequelle mehr detektiert wird.

Die halbautomatische Betriebsart gemäß C) ist z. B. bei Einsatz des Installationsgeräts in Kinderzimmern und Schlafzimmer vorteilhaft aktivierbar. Das Betreten des Schlafzimmers führt nicht automatisch zum Einschalten der Beleuchtung, d. h. bereits schlafende Personen (z. B. Kleinkinder) werden nicht durch Einschaltung der Beleuchtung geweckt. Ist die Beleuchtung jedoch manuell eingeschaltet worden, wird sie automatisch nach Verlassen des Zimmers nach kurzer (eingestellter) Zeit ausgeschaltet.

Die halbautomatische Betriebsart gemäß D) ist z. B. bei Einsatz des Installationsgeräts in Wohnzimmern vorteilhaft aktivierbar. Bei Betreten des Wohnzimmers wird die Beleuchtung automatisch eingeschaltet und bleibt danach bis zum manuellen Ausschalten im eingeschalteten Zustand. Bleibt die sich im Wohnzimmer aufhaltende Person in einer relativ ruhigen Position, z. B. beim Lesen eines Buches, so würde dies bei der vollautomatischen Betriebsart gemäß A) zu einem nicht gewünschten Abschalten der Beleuchtung führen (mangels Detektion einer "bewegten" Masse und somit aufgrund fehlenden Nachtriggerns). Dieser unerwünschte Effekt tritt bei Betriebsart D) nicht auf.

Durch längeres Drücken der manuellen Schalteinrichtung 8 (z. B. Drücken über eine Zeitspanne größer als fünf Sekunden) ist sukzessiv ein Umschalten zwischen manueller Betriebsart gemäß B) und einer automatischen Betriebsart (vollautomatisch A) oder halbautomatisch C) oder D)) und umgekehrt möglich. Bei Umschalten auf die manuelle Betriebart gemäß B) gibt der Bewegungsmelder-Mikroprozessor 2 für die Zeiteinstellung 6 einen unendlich großen Wert und für die Dämmerungseinstellung 7 einen unendlich kleinen Wert vor, unabhängig davon, auf welche Werte die Zeiteinstellung 6 und die Dämmerungseinstellung 7 tatsächlich eingestellt sind. Beim Umschalten auf die automatische Betriebsart wird wieder die durch die tatsächliche Einstellung von Zeiteinstellung 6 und Dämmerungseinstellung 7 vorgegebene Betriebart A) oder C) oder D) unter Beachtung der durch die Zeiteinstellung 6 und Dämmerungseinstellung 7 vorgegebenen Werte aktiviert.

In Fig. 2 sind Ausführungsbeispiele für die Zeiteinstellung und Dämmerungseinstellung dargestellt, wobei bei der Dämmerungseinstellung 7 das Symbol "Sonne" anzeigt, dass das Gerät auch bei Tag arbeiten soll, das Symbol "Dämmerung" anzeigt, dass das Gerät unterhalb eines bei Dämmerung auftretenden Lichtwerts arbeiten soll, das Symbol "Mond" anzeigt, dass das Gerät nur bei Nacht arbeiten soll und das Symbol "M" den manuellen Betrieb kennzeichnet (d. h. Einstellung auf eine nicht erreichbare absolute Finsternis). Bei der Zeiteinstellung 6 sind Symbole "1", "5", "10", "15" zur Einstellung der Ausschaltverzögerung in Minuten vorgesehen. Das Symbol "M" kennzeichnet den manuellen Betrieb (d. h. Einstellung auf eine unendlich große Ausschaltverzögerung). Die Einstellungen können jeweils stufenlos vorgenommen werden.

In Fig. 3 ist ein Schnitt durch einen Geräteeinsatz 1 des elektrischen/elektronischen Installationsgeräts dargestellt, d. h. es ist konkret ein Geräteeinsatz gezeigt, welcher auf einen Gerätesockel aufgesteckt wird, um das Installationsgerät derart zu komplettieren (siehe hierzu auch Fig. 6). Das sehr kompakt aufgebaute Installationsgerät respektive der Geräteeinsatz 1 weist eine auf ein wannenförmiges Gehäuseunterteil 10 aufrastbare Schaltwippe 14 auf, in welche eine schmale, für Tageslicht und IR-Licht durchlässige Schutzabdeckung 15 integriert ist. Unterhalb der Schutzabdeckung 15 sind das Infrarot-Linsensystem 17 sowie der Infrarotsensor (siehe Ziffer 12 in Fig. 4) der IR-Detektor/Linsen-Anordnung 3 angeordnet. Innerhalb des Gehäuseunterteils 10 ist eine Leiterplatte 11 befestigt, welche zur Montage der elektrischen/elektronischen Bauelemente des Gerätes (siehe die vorstehend erläuterten Baukomponenten 2, 3, 4, 5, 6, 7, 8, 9) dient. Unter anderem sind der Tageslichtsensor 5 und die manuelle Schalteinrichtung 8 auf der Leiterplatte 11 verlötet, wobei letztere mittels eines an der Schaltwippe 14 angeformten Betätigungszapfens 16 beaufschlagbar ist.

Den Boden des Gehäuseunterteils 10 durchbrechende Steckkontakte 13 dienen der elektrischen Verbindung des Geräteeinsatzes 1 mit hierzu korrespondierenden Kupplungsbuchsen des nicht dargestellten Gerätesockels. Ein derartiger Infrarot-Bewegungsmelder mit Kupplungsbuchse am Gerätesockel ist z. B. aus der DE 299 15 859 U1 bekannt (siehe insbesondere Fig. 1).

In Fig. 4 ist eine perspektivische Sicht auf eine Leiterplatte des elektrischen/elektronischen Installationsgeräts respektive des Geräteeinsatzes dargestellt. Auf der Leiterplatte 11 sind u. a. der Infrarotsensor 12, der Tageslichtsensor 5, die Zeiteinstellung 6, die Dämmerungseinstellung 7 und die manuelle Schalteinrichtung 8 verlötet. Das über dem Infrarotsensor 12 angeordnete Infrarot-Linsensystem 17 realisiert in Verbindung mit Spiegeln 19, 20 einen Erfassungsbereich für IR-Strahlung von etwa 180°.

In Fig. 5 ist ein beispielsweise in einer Unterputzdose montiertes elektrisches/elektronisches Installationsgerät dargestellt, mit
- Schaltwippe 14 mit transparenter Schutzabdeckung 15,
- Abdeckrahmen 18,
wobei der Abdeckrahmen 18 optional mit einem Beschriftungsfeld versehen werden kann. Selbstverständlich lässt sich das in Form eines elektrischen Unterputz-Installationsgerätes ausgeführte Gerät auch in Aufputzgehäuse montieren, wie dies in der bereits erwähnten DE 299 15 859 U1 gezeigt ist.

In Fig. 6 ist schematisch eine Seitenansicht eines aus Geräteeinsatz, Gerätesockel und Abdeckrahmen bestehenden Komplettgeräts vor dem Zusammenbau dargestellt,
- mit Geräteeinsatz 1 inklusive Schaltwippe 14 mit Schutzabdeckung 15, wobei sich im Bodenbereich des Geräteeinsatzes 1 die Steckkontakte 13 befinden und die Zeiteinstellung 6 sowie die Dämmerungseinstellung 7 vom Bodenbereich her zugänglich sind,
- mit Abdeckrahmen 18
- und mit Gerätesockel 22, welcher Spreizkrallen für die Montage in einer handelsüblichen Unterputzdose aufweist, welcher Klemmen für einen Netzanschluss aufweist und welcher mit Kupplungsbuchsen 21 korrespondierend zu den Steckkontakten 13 versehen ist.

Um die Zeiteinstellung 6 und die Dämmerungseinstellung 7 auf eine gewünschte Betriebsart einzustellen und um die gewünschten Werte für die Ausschaltverzögerung und den Lichtwert (unterhalb dessen das Gerät automatisch oder halbautomatisch arbeiten soll) vorzugeben, wird der Geräteeinsatz 1 vom Gerätesockel 22 abgezogen (Trennung von Steckkontakten 13 und Kupplungsbuchse 21), wodurch die Zugänglichkeit zur Zeiteinstellung 6 und Dämmerungseinstellung 7 ermöglicht wird.

Alternativ zu dieser Trennung des Gerätes in einen Geräteeinsatz und einen Gerätesockel ist auch eine einteilige Ausführungsform des Geräts realisierbar, bei welcher die Schaltwippe 14 nach vorne um ungefähr 90° aufklappbar ist, so dass im aufgeklappten Zustand die Zeiteinstellung 6 und die Dämmerungseinstellung 7 von der Gerätefront her zugänglich sind. Selbstverständlich entfällt die Konfiguration Steckkontakte 13 / Kupplungsbuchse 21 bei dieser einteiligen Ausführungsform.

### Bezugszeichenliste:

- 1: Geräteeinsatz des elektrischen/elektronischen Installationsgeräts
- 2: Bewegungsmelder-Mikroprozessor
- 3: IR-Detektor/Linsen-Anordnung
- 4: Verstärker/Filter
- 5: Tageslichtsensor
- 6: Zeiteinstellung = Einstelleinrichtung für Ausschaltverzögerung
- 7: Dämmerungseinstellung = Einstelleinrichtung für Dämmerungsschalter
- 8: manuelle Schalteinrichtung
- 9: Schaltglied
- 10: wannenförmiges Gehäuseunterteil
- 11: Leiterplatte
- 12: Infrarotsensor
- 13: Steckkontakte zum Anschluss an einen Gerätesockel
- 14: Schaltwippe
- 15: Schutzabdeckung
- 16: Betätigungszapfen
- 17: Infrarot-Linsensystem
- 18: Abdeckrahmen
- 19: Spiegel
- 20: Spiegel
- 21: Kupplungsbuchse
- 22: Gerätesockel

## Patentansprüche

1. Elektrisches/elektronisches Installationsgerät mit einem Bewegungsmelder-Mikroprozessor (2), welcher ausgangsseitig ein Schaltglied (9) für eine Beleuchtungseinrichtung ansteuert, und welcher eingangsseitig Signale einer IR-Detektor/Linsen-Anordnung (3), eines Tageslichtsensors (5), einer Zeiteinstellung (6) zur Vorgabe einer Ausschaltverzögerung, einer Dämmerungseinstellung (7) zur Vorgabe eines Lichtwertes, unterhalb dessen das Gerät arbeiten soll und einer manuellen, die Beleuchtungseinrichtung schaltenden Schalteinrichtung (8) empfängt, **dadurch gekennzeichnet,**
- **dass** die Zeiteinstellung (6) auf eine unendlich große Ausschaltverzögerung einstellbar ist, d. h. die Dauer der Ausschaltverzögerung entspricht einer unendlich großen Zeitspanne und die einmal eingeschaltete Beleuchtungseinrichtung bleibt demzufolge auch ohne jedes Nachtriggern stets im eingeschalteten Zustand und
- **dass** die Dämmerungseinstellung (7) auf einen unendlich kleinen Lichtwert einstellbar ist, d. h. der Lichtwert, bei dem das Gerät mit der Erfassung der Infrarotstrahlung beginnen soll, entspricht absoluter, in einer natürlichen Umgebung niemals erreichbarer Finsternis und die einmal ausgeschaltete Beleuchtungseinrichtung bleibt demzufolge auch bei sehr großer Finsternis trotz Detektion einer "bewegten" Wärmequelle stets im ausgeschalteten Zustand.

2. Installationsgerät nach Anspruch 1, **dadurch gekennzeichnet, dass** die Beaufschlagung der manuellen Schalteinrichtung (8) durch eine Schaltwippe (14) erfolgt.

3. Installationsgerät nach Anspruch 1 oder 2, **dadurch gekennzeichnet, dass** das Installationsgerät in einen Geräteeinsatz (1) und einen Gerätesockel (22) unterteilt ist, wobei diese beiden Baueinheiten über Steckkontakte (13) und korrespondierende Kupplungsbuchsen (21) elektrisch miteinander verbindbar sind und wobei die Zeiteinstellung (6) und die Dämmerungseinstellung (7) nach Trennung beider Baueinheiten zugänglich sind.

4. Installationsgerät nach Anspruch 2, **dadurch gekennzeichnet, dass** die Schaltwippe (14) um ungefähr 90° nach vorne aufklappbar ist, so dass im aufgeklappten Zustand die Zeiteinstellung (6) und die Dämmerungseinstellung (7) von der Gerätefront her zugänglich sind.

## Claims

1. Electrical/electronic installation device comprising a motion detector microprocessor (2), which, on the output side, actuates a switching element (9) for a lighting device, and which, on the input side, receives signals from an IR detector/lens array (3), a daylight sensor (5), a time-setting system (6) for presetting a switch-off delay, a dusk setting system (7) for presetting a light value below which the device is intended to operate and a manual switching device (8) which switches the lighting device, **characterized**
- **in that** the time-setting system (6) can be set to an infinitely large switch-off delay, i.e. the duration of the switch-off delay corresponds to an infinitely large time span and the lighting device, once switched on, accordingly also always remains in the switched-on state without any retriggering, and
- **in that** the dusk setting system (7) can be set to an infinitely small light value, i.e. the light value at which the device is intended to begin the detection of the infrared radiation corresponds to absolute darkness that can never be achieved in a natural environment and the lighting device, once switched off, accordingly also always remains in the switched-off state in the case where it is very dark despite detection of a "moving" heat source.

2. Installation device according to Claim 1, **characterized in that** the manual switching device (8) is acted upon by a switching rocker (14).

3. Installation device according to Claim 1 or 2, **characterized in that** the installation device is divided into a device insert (1) and a device base (22), wherein these two units are electrically connectable to one another via plug-type contacts (13) and corresponding coupling jacks (21), and wherein the time-setting system (6) and the dusk setting system (7) are accessible once the two units have been separated.

4. Installation device according to Claim 2, **characterized in that** the switching rocker (14) can be folded out forwards through approximately 90° so that, in the folded-out state, the time-setting system (6) and the dusk setting system (7) are accessible from the device front panel.

## Revendications

1. Équipement d'installation électrique/ électronique comportant un microprocesseur détecteur de mouvement (2) qui commande, du côté de la sortie, un élément de commutation (9) destiné à un dispositif d'éclairage et qui, du côté de l'entrée, reçoit des signaux d'un système à détecteur IR/lentille (3), d'un capteur de lumière du jour (5), d'un réglage d'heure (6) destiné à prérégler un retard de désactivation, d'un réglage d'obscurité (7) destiné à prérégler une valeur de luminosité en dessous de laquelle l'équipement doit fonctionner et d'un dispositif de commutation manuelle (8) commutant le dispositif d'éclairage, **caractérisé**
- **en ce que** le réglage d'heure (6) peut être réglé sur un retard de désactivation infini, c'est-à-dire que la durée du retard de désactivation correspond à un intervalle de temps infini et que le dispositif d'éclairage ayant été activé une fois reste ensuite activé sans aucun redéclenchement et
- **en ce que** le réglage d'obscurité (7) peut être réglé sur une valeur de luminosité infiniment faible, c'est-à-dire que la valeur de luminosité par laquelle l'équipement doit commencer lors de la détection du rayonnement infrarouge correspond à une obscurité absolue ne pouvant jamais être atteinte dans un environnement naturel et que le dispositif d'éclairage ayant été une fois désactivé reste à l'état désactivé en cas de très forte obscurité malgré la détection d'une source de chaleur déplacée.

2. Équipement d'installation selon la revendication 1, **caractérisé en ce que** la mise en oeuvre du dispositif de commutation manuelle (8) s'effectue au moyen d'un levier (14).

3. Équipement d'installation selon la revendication 1 ou 2, **caractérisé en ce que** l'équipement d'installation est subdivisé en un insert d'équipement (1) et un socle d'équipement (22), dans lequel ces deux modules peuvent être reliés l'un à l'autre électriquement par l'intermédiaire de contacts mâles (13) et de fiches de couplage (21) correspondantes et dans lequel le réglage d'heure (6) et le réglage d'obscurité (7) sont accessibles après séparation des deux modules.

4. Équipement d'installation selon la revendication 2, **caractérisé en ce que** le levier (14) peut être rabattu vers l'avant d'environ 90° de manière à ce que, à l'état rabattu, le réglage d'heure (6) et le réglage d'obscurité (7) soient accessibles par la face avant de l'équipement.
